# EUROPEAN PATENT APPLICATION

(11) **EP 3 330 120 A1**
(43) Date of publication of application: **06.06.2018**
(21) Application number: 17172272.1
(22) Date of filing: 22.05.2017
(51) Int. Cl.: B60L 11/18

(54) **A BIDIRECTIONAL VEHICLE-MOUNTED CHARGE AND DISCHARGE SYSTEM AND ITS METHODS**

(30) Priority: 05.12.2016 CN 201611105189
(71) Applicant: Phihong Technology Co., Ltd., Gueishan Township T'ao yuan 333 (TW)
(72) Inventor: CHEN, Chun-Chen, Taoyuan City 333, (TW); LEE, Jian-Hsieng, Tainan City 711 (TW); CHUANG, Chih-Hsiang, Tainan City 702 (TW); KU, Hsiao-Tung, Taoyuan City 333, (TW)
(74) Representative: Zaboliene, Reda

(57) **Abstract**

The invention discloses a bidirectional vehicle-mounted charge and discharge system, which is applied to a vehicle-mounted battery. It is characterized by comprising: an AC / DC conversion module, it is configured to perform AC / DC power conversion; and a DC / DC conversion module, it is coupled to the AC / DC conversion module to stabilize the output voltage and current and charge the vehicle-mounted battery. The AC / DC conversion module and the DC / DC conversion module comprise at least one bidirectional conversion circuit, it is configured to carry out discharge of the vehicle-mounted battery.

## Description

### TECHNICAL FIELD

The present invention generally relates to an electric vehicle charge system, and more particularly, to a bidirectional vehicle-mounted charge and discharge system and its methods.

### BACKGROUND

In recent years, the driving population is increasing. The rapid progress of science and technology makes the rapid development of automotive technology. In addition to the pursuit of improved vehicle performance, the energy used in cars is also getting more and more attention. The requirements for clean energy, the electric car immediately listed. Further, the development of society and the promotion of national policy began to develop electric vehicles.

There are more and more types of electric vehicles. The subsequent electronic vehicle systems are combined with a new generation of intelligent technology to show closer to the user's traffic control environment. For example, a new electric vehicle has a vehicle control unit (VCU), also known as the vehicle control system or hybrid control unit. The vehicle control unit can provide users with the control commands required under different operating conditions, the security features and the CAN communication interface to achieve a complete control through the integration of the signal of the system. These traffic applications not only improve the driver's driving quality of safety, but also create the trend of electric vehicle applications. These traffic applications become one of the indispensable equipment.

In addition to the control of electric vehicles, the most noteworthy is the use of energy and power for electric vehicles. The battery is the most important key technology for electric vehicle development. As the cost of battery accounted for a considerable proportion of the overall cost of electric vehicles. The carbon emissions of battery manufacturing also accounted for a considerable portion of the entire life cycle of carbon emissions. Therefore, the development of electric vehicles almost rely on the development of battery technology. Battery performance parameters include battery capacity, charging time and battery life. Commonly used in rechargeable batteries for electric vehicles, including nickel-metal hydride batteries (Ni-MH) or lithium-ion battery (Li-ion battery). Lithium batteries, such as lithium iron phosphate batteries and lithium titanate batteries, have been used in the market for electric vehicles.

The vehicle-mounted rechargeable batteries of electric vehicles can be charged in a short time, but the charge time is inversely proportional to the distance traveled. As a result of rapid charging, the amount of power obtained from the rapid charging is small. The driving distance will be significantly reduced. The battery life is detrimental influences, too. For this reason, it is necessary to maintain the wide-ranging establishment of the charging station for convenience. However, the batteries run out of power in some cases. For example, the driver ignores battery power or an emergency causes the battery to fail. Furthermore, the driver need to face with a situation where there is no rescue power.

On the other hand, the battery capacity of electric vehicles has its limitations at this moment. Sometimes it is necessary to charge the battery using a charging device at the charging station. In general, the conventional vehicle-mounted charging device or charging system has an AC / DC converter and a DC / DC converter. First, the charging pile can be connected to the battery by a charging device. When the connection is complete, the charging device inputs the AC of the grid, usually 220V, into the charging device, and then through the AC / DC converter converts to DC. Furthermore, the rechargeable battery can be recharged by using a direct current from DC / DC converter.

Conventional charging devices have poor charging efficiency. Although the battery can be charged, but can not reverse the battery power into AC power to re-use. It is to be understood that re-use of surplus energy in batteries will provide more applications. For example, the electric power of the vehicle-mounted battery can be supplied to the home appliance, the lamp or emergency power supply during a power outage temporarily. Reversal of battery power also includes emergency charging of other vehicle-mounted batteries.

### SUMMARY OF THE INVENTION

According to the above-mentioned deficiencies of the conventional bidirectional vehicle-mounted charge and discharge system, the present invention has been made to solve the above-mentioned problems.

A purpose of the present invention is to provide a bidirectional vehicle-mounted charge and discharge system and its method for improving the efficiency of the vehicle-mounted charger which can not be bidirectional charge and discharge. The system of the present invention improves the above-mentioned shortages and allows the vehicle-mounted battery to discharge in reverse alternating current through a bidirectional switching circuit. According to the bidirectional vehicle-mounted charge and discharge system of the invention can be inputted into alternating current 220V by the conventional charging method, moreover, the DC / DC converter module and the AC / DC converter module can convert DC power from vehicle-mounted battery to AC power. While the AC / DC converter module and the DC / DC converter module uses bidirectional conversion circuit. The use of pulse width modulation signal (PWM) control can improve the efficiency of charge and discharge. In this way to the vehicle-mounted battery charge and discharge, to achieve a stable vehicle-mounted battery charging and discharging and improve the efficiency of charge and discharge.

For the above purpose and other purpose, the present invention provides a bidirectional vehicle-mounted charge and discharge system for use in a vehicle-mounted battery. The bidirectional vehicle-mounted charge and discharge system is characterized by comprising: an AC / DC conversion module configured to perform AC / DC power conversion; and a DC / DC conversion module coupled to the AC / DC conversion module to stabilize the output voltage and the output current and to charge the vehicle-mounted battery; wherein said AC / DC conversion module and the DC / DC conversion module comprise at least one bidirectional conversion circuit which configured to discharge the vehicle-mounted battery.

Another purpose of the present invention is to provide a bidirectional vehicle-mounted charge and discharge method which improves the drawback that the vehicle-mounted charging device can not be discharged in the reverse direction. The system of the present invention improves the above-mentioned shortages and allows the vehicle-mounted battery to discharge in reverse alternating current through a bidirectional switching circuit. According to the bidirectional vehicle-mounted charge and discharge system of the invention can be inputted into alternating current 220V by the conventional charging method, moreover, the DC / DC converter module and the AC / DC converter module can convert DC power from vehicle-mounted battery to AC power. While the AC / DC converter module and the DC / DC converter module uses bidirectional conversion circuit. The use of pulse width modulation (PWM) signal control can improve the efficiency of charge and discharge. In this way to the vehicle-mounted battery charge and discharge, to achieve a stable vehicle-mounted battery charging and discharging and improve the efficiency of charge and discharge.

For the above purpose, the present invention provides a bidirectional vehicle-mounted charge and discharge method for a vehicle-mounted battery. It is characterized by including: transmitting a direct current to a DC / DC conversion module to stabilize the output voltage and the output current; transmitting said direct current to an AC / DC conversion module, converting said direct current into an alternating current; and outputting said alternating current.

For all of the above purposes, wherein at least one bidirectional conversion circuit further comprises a plurality of metal-oxide-semiconductor field-effect transistor (MOSFETs) for changing the current direction.

For all of the above purposes, wherein said at least one bidirectional conversion circuit further comprises at least one solenoid valve for controlling the plurality of metal-oxide-semiconductor field-effect transistor (MOSFETs) by pulse width modulation.

For all of the above purposes, wherein said the pulse width modulation performs synchronous rectification or zero shear to reduce the conduction loss and enhance the conversion efficiency.

For all of the above purposes, wherein the power of the vehicle-mounted battery is converted into AC power.

For all of the above purposes, wherein further comprising a communication module coupled to said AC / DC conversion module and said DC / DC conversion module for communication with the electronic device.

The foregoing is intended to illustrate the purpose, technical instrumentalities and technical advantages of the invention as it becomes apparent to those skilled in the art from the following description of exemplary embodiments, accompanying drawings and the claims.

### BRIEF DESCRIPTION OF THE DRAWINGS

FIG. 1 illustrates an architecture of a bidirectional vehicle-mounted charge and discharge system according to an embodiment of the present invention.
FIG. 2 illustrates a charge-discharge architecture of a bidirectional vehicle-mounted charge and discharge system according to an embodiment of the present invention.
FIG. 3 illustrates a charge-discharge circuit diagram of a bidirectional vehicle-mounted charge and discharge system according to an embodiment of the present invention.
FIG. 4 illustrates a charging method flowchart of a bidirectional vehicle-mounted charge and discharge system according to an embodiment of the present invention.
FIG. 5 illustrates a discharging method flowchart of a bidirectional vehicle-mounted charge and discharge system according to an embodiment of the present invention.

The components, characteristics and advantages of the present invention may be understood by the detailed description of the preferred embodiments outlined in the specification and the drawings attached.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims. The layout of components may be more complicated in practice.

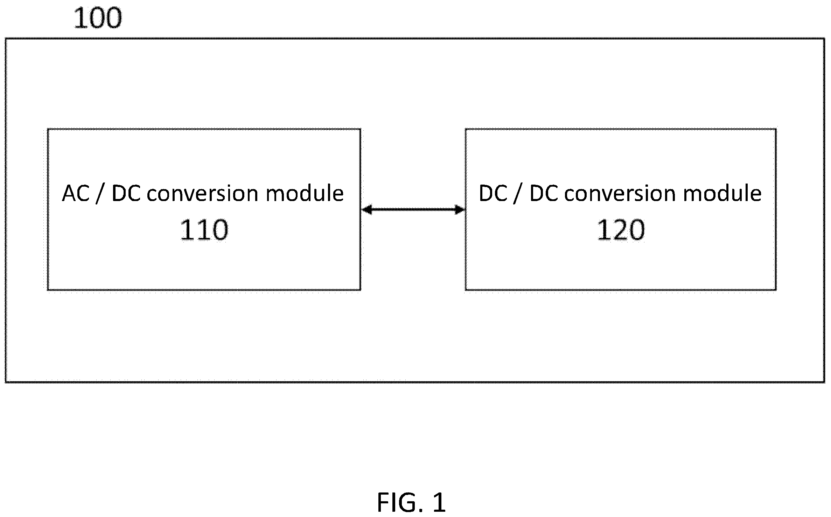

FIG. 1 illustrates an architecture of a bidirectional vehicle-mounted charge and discharge system 100 (hereinafter referred to as charge and discharge system) according to an embodiment of the present invention. An AC / DC conversion module 110 configured to perform AC / DC power conversion; and a DC / DC conversion module 120 coupled to the AC / DC conversion module 110 to stabilize the output voltage and the output current and to charge the vehicle-mounted battery; wherein said AC / DC conversion module 110 and the DC / DC conversion module 120 comprise at least one bidirectional conversion circuit which configured to discharge the vehicle-mounted battery.

Referring to the description of FIG. 1, in one embodiment, the AC / DC conversion module 110 includes a structure of power supply circuits. For example, including, a transformer that reduces the AC voltage of the AC network, a rectifier circuit that converts the AC voltage into pulsating DC voltage. Furthermore, may include other circuit components for AC / DC conversion as well as power factor correction circuits. For example, a passive power factor correction circuit or an active power factor correction circuit is used to control the switching state of the active switch by appropriate feedback compensation to store and release the energy of the energy storage component so that the input current follows the command current to obtain a nearly sinusoidal waveform and input current with the same phase of the input power, to achieve the purpose of power factor correction.

Referring to the description of FIG. 1, in one embodiment, the DC / DC converter module 120 includes a structure of power supply circuits. For example, including, a filter circuit that converts pulsating DC voltage into a flat DC voltage, a steady voltage circuit that provides a stable DC voltage source. Furthermore, it may include other circuit components for DC / DC conversion, and to isolate and stabilize the output voltage and stabilize the output current by the circuit design.

Referring to the description of FIG. 1, in one embodiment, the AC / AC conversion module 110 and the DC / DC conversion module 120 further include at least one bidirectional conversion circuit configured to perform a reverse discharge of a vehicle-mounted battery. The bidirectional conversion circuit comprises a plurality of MOSFETs in place of the conventional diodes to change the direction of the current flow.

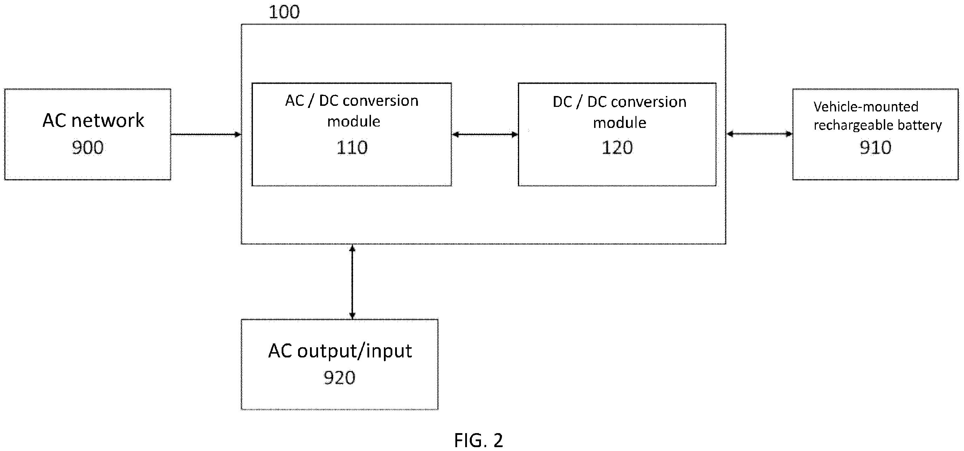

FIG. 2 illustrates a charge-discharge architecture of a bidirectional vehicle-mounted charge and discharge system according to an embodiment of the present invention. Referring to the description of Fig. 2, in one embodiment, the AC network or the charging pile 900 provides alternating current, for example, 220V. After the user or the driver has connected the AC network 900 to the charge and discharge system 100, an alternating current can be inputted. After the alternating current is inputted to the AC / DC conversion module 110 of the charge and discharge system 100 through the circuit components to operate. For example, a transformer that reduces the AC voltage of the AC network, a rectifier circuit that converts the AC voltage into pulsating DC voltage. Furthermore, it may include other circuit components for AC / DC conversion as well as active power factor correction circuits by appropriate feedback compensation to store and release the energy of the energy storage component so that the input current follows the command current to obtain a nearly sinusoidal waveform and input current with the same phase of the input power, to achieve the purpose of power factor correction.

Referring to the FIG. 2, in one embodiment, the DC power output from the AC / DC conversion module 110 converts the pulsating DC voltage to a flat DC voltage via a filter circuit of the DC / DC conversion module 120, and a steady voltage circuit which is a circuit designed to provide a stable DC voltage source and other circuit components for DC / DC conversion as well as to isolate and stabilize the output voltage and stabilize the output current. This purpose is to charge the vehicle-mounted rechargeable battery 910 by outputting a direct current that can be used by the rechargeable battery.

Referring to the FIG. 2, in one embodiment, if the vehicle-mounted rechargeable battery 910 has electric power, it may be discharged in the reverse direction through the charge and discharge system 100. The direct current discharged from the vehicle-mounted rechargeable battery 910 is inputted to the DC / DC conversion module 120 of the charge and discharge system 100. At this time, the bidirectional conversion circuit changes the direction of the current, making the DC power of the vehicle-mounted rechargeable battery from the flat DC voltage to pulsating DC voltage. The pulsating DC voltage is inputted to the AC / DC conversion module 110, and the input AC voltage is increased by the circuit components of the AC / DC conversion module 110, such as a rectifier circuit converts pulsating DC voltage to AC voltage, and the transformer. Furthermore, it may include other circuit components for AC / DC conversion, as well as power factor correction circuits, will eventually be converted to an alternating current output, such as 220 Vac.

Referring to the FIG. 2, in one embodiment, the alternating current output 920 of the vehicle-mounted rechargeable battery 910 is an alternating current that can be used by commercial power. This power supply can be used to supply household equipment in the event of a power outage and emergency equipment in case of an emergency. Furthermore, it may also include using the AC output 920 as a rescue power source for other electric vehicles. Therefore, the vehicle-mounted rechargeable battery can share power with each other via the charge and discharge system 100 of the present invention. The vehicle-mounted rechargeable battery may also obtain power in time through the charge and discharge system 100 in the absence of a charging station.

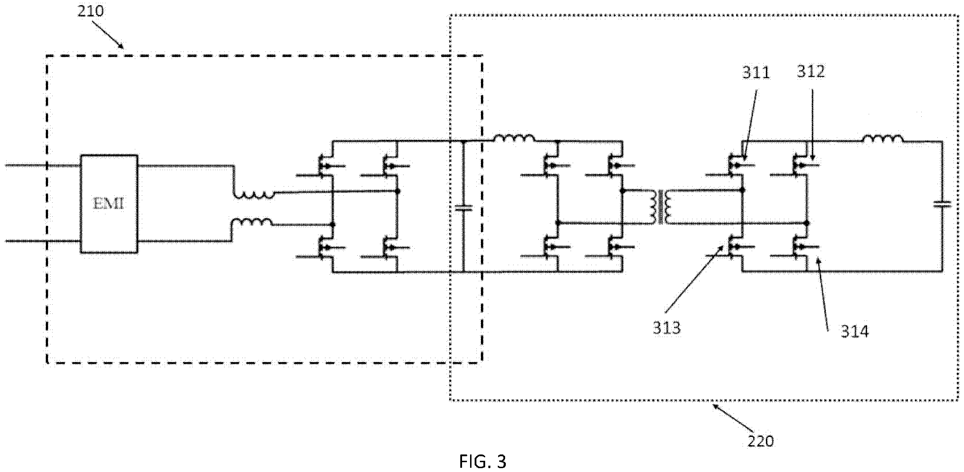

FIG. 3 illustrates a charge and discharge circuit of a bidirectional vehicle-mounted charge and discharge system according to an embodiment of the present invention. Referring to the FIG. 3, in one embodiment, the circuit comprises a bidirectional conversion circuit. Said bidirectional conversion circuit has an AC / DC conversion circuit 210 and a DC / DC conversion circuit 220. The circuit configuration of said AC / DC conversion circuit 210 is as shown in Fig. 3, but it is not limited thereto and may be other circuits. The circuit configuration of said DC / DC conversion circuit 220 is as shown in Fig. 3, but it is not limited thereto and may be other circuits. Said bidirectional conversion circuit also has a plurality of MOSFETs 311, 312, 313, 314 in place of the diodes used in the prior art. The diodes which used in the conventional conversion circuit can not change the current direction and have no other sequential control as long as the diode is turned on by energization. When the MOSFETs 311, 312, 313, and 314 are used in the bidirectional conversion circuit, the pulse width modulation signal control may be used to turn on and off the MOSFETs 311, 312, 313, 314. It is also possible to change the direction of the current through a control program. The pulse width modulated signal (PWM) is a technique for converting a pulse wave to an analog signal. It changes the size of the duty cycle so that the overall average voltage value increases or decreases through intermittent voltage and power switching to achieve energy saving and control effects in the same frequency.

Referring to the FIG. 3, in one embodiment, it is to be noted that the bidirectional conversion circuit further comprises a solenoid valve for controlling said plurality of MOSFETs 311, 312, 313, 314 with the pulse width modulation. The use of the MOSFETs will also make the bidirectional conversion circuit to improve the charge and discharge efficiency. For example, the use of the MOSFETs on both sides of the DC / DC conversion module 120 achieves the effect of synchronous rectification or zero shear by the pulse width modulation control technique.

Referring to the FIG. 1 and FIG. 2, in one embodiment, the bidirectional vehicle-mounted charge and discharge system 100 has the following properties: on the AC terminals, the voltage of 85 - 265Vac, the frequency of 47 - 63Hz, the current of 16Amax and the power factor ≧ 0.92 or more; on the DC terminals, the voltage of 250 - 432Vdc, the current of 10Amax, the voltage accuracy of + / - 1%, the current accuracy of +/- 3%, the voltage ripple of +/- 5%, the power of 3.3kWmax. In another embodiment, the bidirectional vehicle-mounted charge and discharge system 100 has the following properties: on the AC terminals, the voltage of 85 - 265Vac, the frequency of 47 - 63Hz, the current of 32Amax and the power factor ≧ 0.92 or more; on the DC terminals, the voltage of 250 - 432Vdc, the current of 20Amax, the voltage accuracy of + / - 1%, the current accuracy of +/- 3%, the voltage ripple of +/- 5%, the power of 6.6kWmax. It is to be noted that the above-described electrical properties are merely exemplary embodiments, the parameters such as voltage range, current and output / input voltage may vary with the used network 900 and the combined vehicle-mounted rechargeable battery 910.

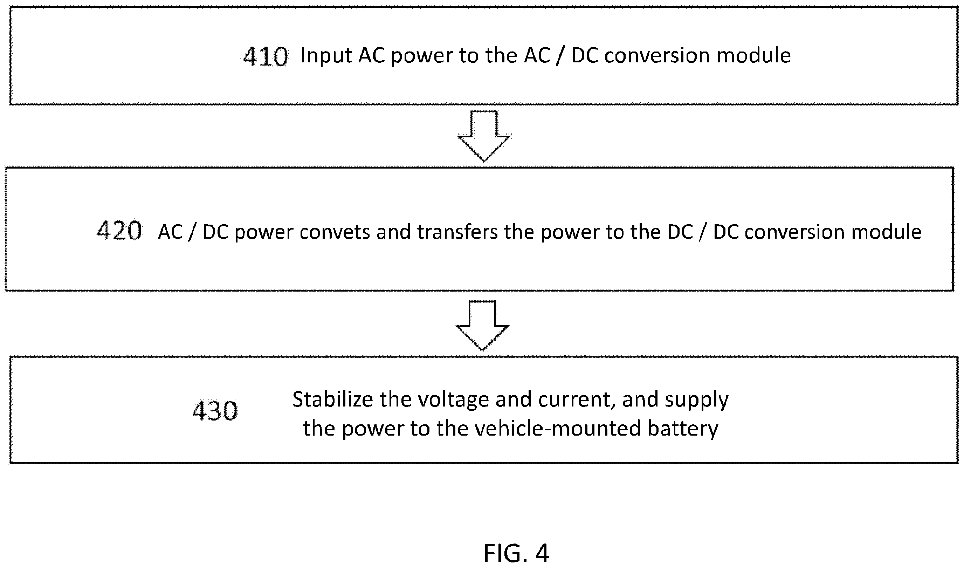

FIG. 4 illustrates a charging method flowchart of a bidirectional vehicle-mounted charge and discharge system according to an embodiment of the present invention. Referring to the FIG. 4, the steps 410 to 430 of the bidirectional vehicle-mounted charging method 400 will be described in detail below, in accordance with the above-described bidirectional vehicle-mounted charge and discharge system 100 and related icons of the FTG. 1 to FIG. 3.

Referring to the FIG. 4 and FIG. 2, in one embodiment, in step 410, the AC network 900 inputs AC power to the AC / DC conversion module 110. For example, an AC power is inputted after the user or the driver connects the AC network 900 to the charge and discharge system 100.

Referring to the FIG. 4 and FIG. 2, in step 420, after the AC power is inputted to the AC / DC conversion module 110 of the charge and discharge system 100 then makes an effect by the circuit components. For example, a transformer that reduces the AC voltage of the AC network, a rectifier circuit that converts the AC voltage into pulsating DC voltage. Furthermore, it may include other circuit components for AC / DC conversion as well as active power factor correction circuits by appropriate feedback compensation to store and release the energy of the energy storage component so that the input current follows the command current to obtain a nearly sinusoidal waveform and input current with the same phase of the input power, to achieve the purpose of power factor correction. Finally, the direct current is transferred to the DC / DC converter module 120.

Referring to the FIG. 4 and FIG. 2, in step 430, the DC power output from the AC / DC conversion module 110 converts the pulsating DC voltage to a flat DC voltage via a filter circuit of the DC / DC conversion module 120, and a steady voltage circuit which is a circuit designed to provide a stable DC voltage source and other circuit components for DC / DC conversion as well as to isolate and stabilize the output voltage and stabilize the output current. This purpose is to charge the vehicle-mounted rechargeable battery 910 by outputting a direct current that can be used by the rechargeable battery.

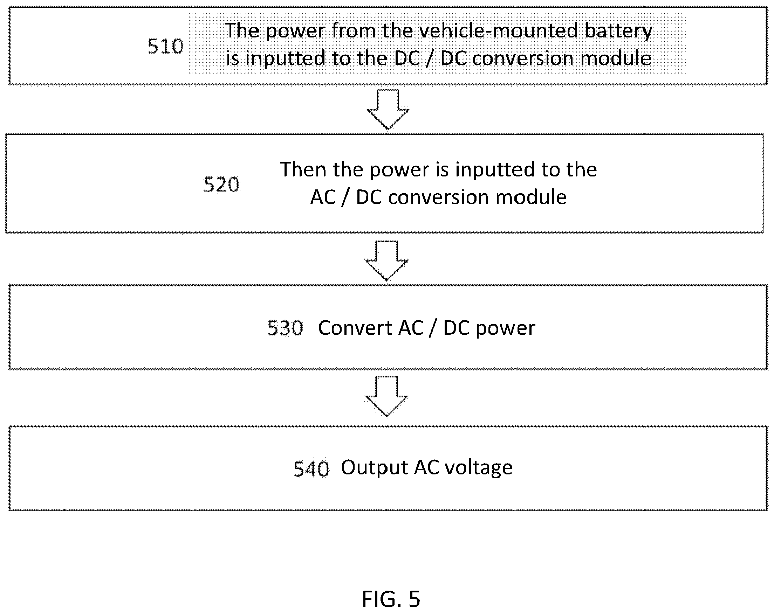

FIG. 5 illustrates a discharging method flowchart of a bidirectional vehicle-mounted charge and discharge system according to an embodiment of the present invention. Referring to the FIG. 5, the steps 510 to 540 of the bidirectional vehicle-mounted discharging method 500 will be described in detail below, in accordance with the above-described bidirectional vehicle-mounted charge and discharge system 100 and related icons of the FIG. 1 to FIG. 3.

Referring to the FIG. 5 and FIG. 2, in one embodiment, in step 510, the vehicle-mounted rechargeable battery 910 has direct-current power and can be discharged in the reverse direction via the charge and discharge system 100. The direct current discharged from the vehicle-mounted rechargeable battery 910 is inputted to the DC / DC conversion module 120 of the charge and discharge system 100. In one embodiment, in step 520, the bidirectional conversion circuit changes the direction of the current, making the DC power of the vehicle-mounted rechargeable battery from the flat DC voltage to pulsating DC voltage. Then the pulsating DC voltage is inputted to the AC / DC conversion module 110. In one embodiment, in step 530, the input AC voltage is increased by the circuit components of the AC / DC conversion module 110, such as a rectifier circuit converts pulsating DC voltage to AC voltage, and the transformer. Furthermore, it may include other circuit components for AC / DC conversion, as well as power factor correction circuits, will eventually be converted to an alternating current output, such as 220 Vac.

Referring to the FIG. 5 and FIG. 2, in one embodiment, in step 540, the alternating current output 920 of the vehicle-mounted rechargeable battery 910 is an alternating current that can be used by commercial power. This power supply can be used to supply household equipment in the event of a power outage and emergency equipment in case of an emergency. Furthermore, it may also include using the AC output 920 as a rescue power source for other electric vehicles. Therefore, the vehicle-mounted rechargeable battery can share power with each other via the charge and discharge system 100 of the present invention. The vehicle-mounted rechargeable battery may also obtain power in time through the charge and discharge system 100 in the absence of a charging station.

Referring to the FIG. 1 and FIG. 2, in one embodiment, the charge and discharge system 100 may include a communication module that monitors charge and discharge information in the charging pile 900 and the vehicle-mounted rechargeable battery 910. The communication module can communicate with the vehicle-mounted rechargeable battery 910 or the charging pile 900 controlled by the vehicle control unit in various manners. The communication method may include: a general communication line, a 2G network, a 3G network, and a Wi-Fi wireless network. It is to be noted that the communication method is not limited to this way and includes other currently known communication systems. Realize all the details of communication, monitoring, measurement, protection, and man-machine interaction, which are regulated by the international standard (GB) for DC charging and discharging. For electric vehicles, power, touchscreens and the back-end of cloud system to communicate. Record all information and anomalies of communication between the AC network 900 and the electric vehicle, and connect with the back-end of cloud system to provide information to the auto repair center for analysis. But the present invention is not limited to this, a control program such as an appointment charging, a charging time setting, a charge amount setting, and a program update can be performed. The GB of the international standard CAN protocol can be found in GB / T27930-2011 "Communication protocols between off-board conductive charger and battery management system for electric vehicle."

In summary, the bidirectional vehicle-mounted charge and discharge system and its method adopt a bidirectional circuit design, and the pulse width modulation signal (PWM) control is used to turn on and off the MOSFETs and change the direction of the current through the control program to achieve the effect of bidirectional charge and discharge. The bidirectional vehicle-mounted charge and discharge system and its method are usually responsible for converting the commercial power into a direct current to charge the electric vehicle, and it can convert the electric power of the battery on the electric vehicle into alternating current. For example: to be a backup power when the power outage or another electric vehicle rescue use, breaking the conventional only one-way use of vehicle-mounted charger. On the other hand, the bidirectional vehicle-mounted charge and discharge system of the present invention can be controlled using a pulse width modulation signal system. For example: synchronous rectification improves conversion efficiency.

In the description above, for the purposes of explanation, numerous specific details are set forth in order to provide a thorough understanding of the present invention. It will be apparent, however, to one skilled in the art that the present invention may be practiced without some of these specific details. In other instances, well-known structures and devices are not shown in block diagram form. There may be intermediate structure between illustrated components. The components described or illustrated herein may have additional inputs or outputs that are not illustrated or described.

The components described in the various embodiments are separate circuits, but some or all of the components may also be integrated into a single circuit, so that the different components described in the appended claims may correspond to the function of one or more circuits.

The present invention may include various processes. The processes of the present invention may be performed by hardware components or may be embodied in computer-readable instructions, which may be used to cause a general purpose or special purpose processor or logic circuits programmed with the instructions to perform the processes. Alternatively, the processes may be performed by a combination of hardware and software.

An embodiment is an implementation or example of the invention. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments of the invention, various features of the invention are sometimes grouped together in a single embodiment, figure, or description thereof for the purpose of streamlining the disclosure and aiding in the understanding of one or more of the various inventive aspects.

If it is said that an element "A" is coupled to or with element "B," element A may be directly coupled to element B or be indirectly coupled through, for example, element C. When the specification states that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. Tf the specification refers to "a" or "an" element, this does not mean there is only one of the described elements.

The present invention is intended to cover various modifications and similar arrangements included within the spirit and scope of the appended claims, the scope of which should be accorded the broadest interpretation so as to encompass all such modifications and similar structures.

## Claims

1. A bidirectional vehicle-mounted charge and discharge system (100) for use in a vehicle-mounted battery comprising:
an AC / DC conversion module (110) configured to perform AC / DC power conversion; and
a DC / DC conversion module (120) coupled to said AC / DC conversion module (110) to stabilize the output voltage and the output current and to charge a vehicle-mounted battery.

2. The bidirectional vehicle-mounted charge and discharge system (100) of claim 1, wherein said AC / DC conversion module (110) and said DC / DC conversion module (120) comprising at least one bidirectional conversion circuit which configured to discharge said vehicle-mounted battery.

3. The bidirectional vehicle-mounted charge and discharge system (100) of claim 2, wherein said at least one bidirectional conversion circuit further comprising a plurality of metal-oxide-semiconductor field-effect transistor (311, 312, 313, 314) for changing the current direction.

4. The bidirectional vehicle-mounted charge and discharge system (100) of claim 3, further comprising:
a pulse width modulation performing synchronous rectification or zero shear to reduce the conduction loss and enhance the conversion efficiency.

5. The bidirectional vehicle-mounted charge and discharge system (100) of claim 4, wherein a power of said vehicle-mounted battery being converted into AC power.

6. The bidirectional vehicle-mounted charge and discharge system (100) of claim 5, wherein said at least one bidirectional conversion circuit further comprising a solenoid valve for controlling said plurality of metal-oxide-semiconductor field-effect transistor (311, 312, 313, 314) with the pulse width modulation.

7. The bidirectional vehicle-mounted charge and discharge system (100) of claim 5, further comprising:
a communication module.

8. The bidirectional vehicle-mounted charge and discharge system (100) of claim 7, wherein said communication module coupled to said AC / DC conversion module (110) and said DC / DC conversion module (120) for communication with an electronic device.

9. A bidirectional vehicle-mounted charge and discharge method for a vehicle-mounted battery comprising:
transmitting a direct current to a DC / DC conversion module (120) to stabilize the output voltage and the output current;
transmitting said direct current to an AC / DC conversion module (110), converting said direct current into an alternating current; and
outputting said alternating current.

10. The bidirectional vehicle-mounted charge and discharge method of claim 9, further comprising:
wherein said direct current passing through at least one bidirectional conversion circuit.

11. The bidirectional vehicle-mounted charge and discharge method of claim 10, wherein said at least one bidirectional conversion circuit comprising a plurality of metal-oxide-semiconductor field-effect transistor (311, 312, 313, 314).

12. The bidirectional vehicle-mounted charge and discharge method of claim 11, wherein said at least one bidirectional conversion circuit controlling said plurality of metal-oxide-semiconductor field-effect transistor (311, 312, 313, 314) by pulse width modulation.

13. The bidirectional vehicle-mounted charge and discharge method of claim 9, further comprising:
wherein said alternating current passing through at least one bidirectional conversion circuit.

14. The bidirectional vehicle-mounted charge and discharge method of claim 13, wherein said at least one bidirectional conversion circuit comprising a plurality of metal-oxide-semiconductor field-effect transistor (311, 312, 313, 314).

15. The bidirectional vehicle-mounted charge and discharge method of claim 14, wherein said at least one bidirectional conversion circuit controlling said plurality of metal-oxide-semiconductor field-effect transistor (311, 312, 313, 314) by pulse width modulation.
